# FASCICULE DE BREVET EUROPEEN

(11) **EP 0 549 406 B1**
(45) Date de publication et mention de la délivrance du brevet: **26.02.1997**
(21) Numéro de dépôt: 92403399.6
(22) Date de dépôt: 14.12.1992
(51) Int. Cl.: G02B 27/28

(54) **Séparateur optique de polarisation et application à un système de visualisation**
Polarisierender Strahlteiler und Anwendung in einem Anzeigegerät
Polarising beam splitter and its application in an imaging system

(30) Priorité: 20.12.1991 FR 9115900
(43) Date de publication de la demande: 30.06.1993
(73) Titulaire: THOMSON-CSF, 75008 Paris (FR)
(72) Inventeur: Lehureau, Jean-Claude, F-92402 Courbevoie Cédex (FR)
(74) Mandataire: Guérin, Michel

(56) Documents cités:
- EP-A- 0 134 049
- EP-A- 0 428 213
- US-A- 4 097 128

## Description

L'invention concerne un séparateur optique de polarisations et son application à un système de visualisation.

Notamment, le dispositif de l'invention permet de séparer les deux polarisations d'un faisceaux lumineux non polarisé et, dans une application préférentielle, de les transmettre à un dispositif de visualisation électrooptique tel qu'un écran à cristal liquide.

La notion de récupérer la polarisation non utilisée de la source et après séparation et retournement de l'additionner à la polarisation directe a été décrite dans de nombreux Brevets et publications. La séparation se fait généralement par réflexion/transmission sur une multicouche diélectrique (utilisation de l'angle de Brewster) ou par réflexion de Bragg d'une composante polarisée circulairement sur une structure chirale. Ces séparateurs sont limités en ouverture admissible et en domaine de longueurs d'onde.

La rotation recombinaison se fait généralement par un jeu de miroirs ou par une structure nématique twistée. Cette recombinaison nécessite en général un nombre de dioptres important et l'efficacité est loin d'atteindre la valeur thérorique de 2. De plus la qualité de la polarisation est insuffisante et il est nécessaire d'interposer un dernier polariseur conventionnel pour atteindre un contraste image satisfaisant.

De plus, les systèmes connus sont encombrants et lourds.

Le dispositif de l'invention est plus compact et plus léger du fait du faible nombre de dioptres efficaces qu'il nécessite.

On connaît par ailleurs le document US 4 097 128 possédant une cellule à cristal liquide dont les faces des lames de verre sont traitées pour que les molécules de cristal liquide en contact avec une lame soient parallèles à cette lame et que les molécules en contact avec l'autre lame soient perpendiculaires à celle-ci.

On connaît également le document EP 0 428 213 comportant un séparateur de polarisation compris entre deux prismes d'entrée/sortie et comprenant un élément en cristal liquide.

L'invention concerne donc un séparateur optique de polarisations comprenant un élément en cristal liquide nématique enserré entre une première lame transparente et une deuxième lame transparente, l'une des lames étant épaisse de manière qu'une tranche de cette lame est destinée à opérer comme face d'incidence de la lumière, et les indices de réfraction ordinaire et extraordinaire du cristal liquide et l'indice de réfraction de ladite lame épaisse sont tels qu'un faisceau de lumière incident sur ladite tranche est séparé en deux faisceaux polarisés, un premier faisceau réfléchi par réflexion totale et un deuxième faisceau transmis par l'élément en cristal liquide, caractérisé en ce que une première face d'une des lames en contact avec le cristal liquide est traitée de façon que les molécules du cristal liquide en contact arec cette face soient orientées parallèlement à cette face, et une deuxième face de l'autre lame en contact avec le cristal liquide étant traitée de façon à ce que les molécules du cristal liquide soient orientées perpendiculairement à cette face de cette autre lame.

L'invention concerne également un système de visualisation appliquant le séparateur de polarisations, et comportant:
- une source lumineuse fournissant un faisceau de lumière non polarisée ;
- ledit séparateur de polarisations recevant le faisceau de lumière non polarisée et fournissant deux faisceaux de lumière polarisée ayant le même êtat de polarisation ; et
- un modulateur de lumière recevant les faisceaux de lumière polarisée et modulant l'intensité de ces faisceaux.

Les différents objets et caractéristiques de l'invention apparaîtront plus clairement dans la description qui va suivre en se reportant aux figures annexées qui représentent :

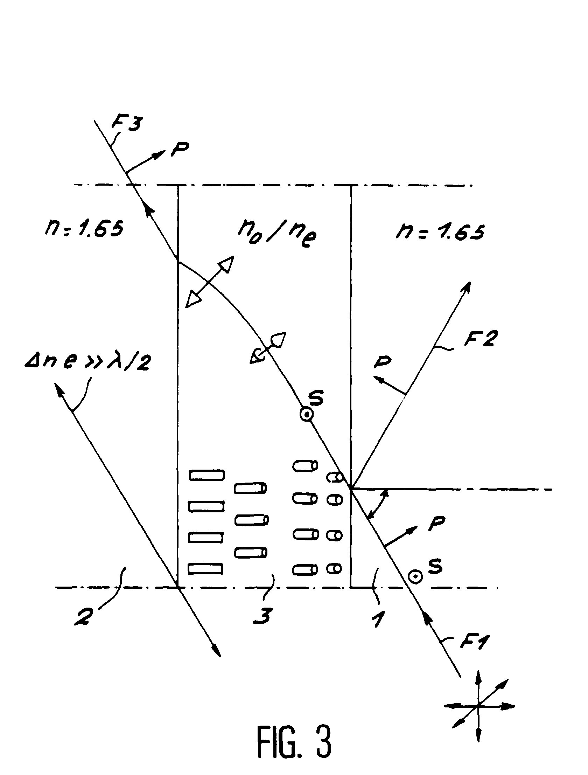

- les figures 1 à 3, un exemple de réalisation d'un séparateur de polarisations selon l'invention ;
- la figure 4, un exemple de réalisation d'un système de visualisation selon l'invention ;
- la figure 5, un autre exemple de réalisation d'un système de visualisation selon l'invention.

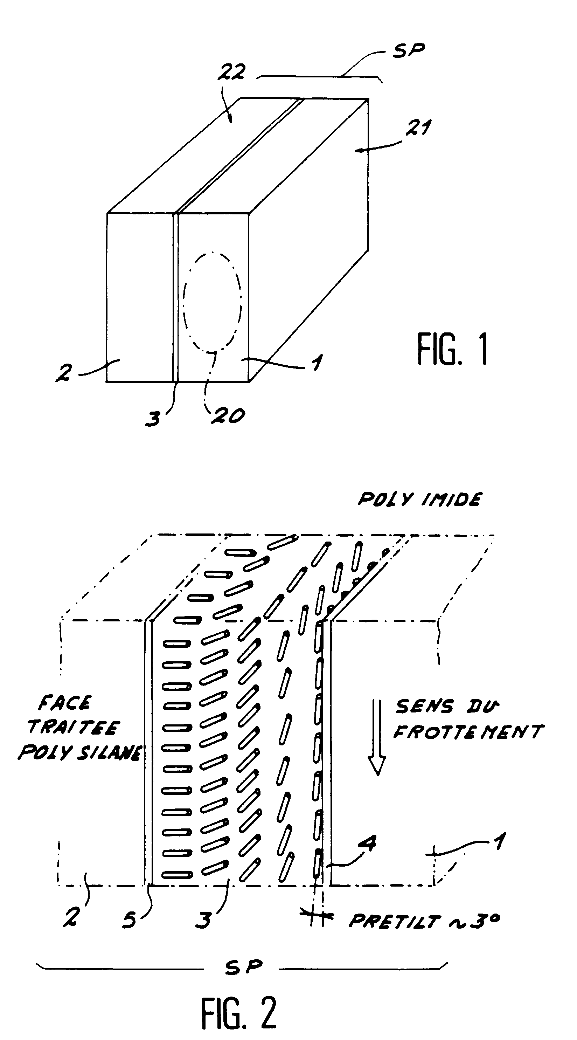

On va donc tout d'abord décrire un exemple de réalisation d'un séparateur de polarisations selon l'invention. Comme cela est représenté en figure 1, le séparateur SP comporte deux lames transparentes 1 et 2 enserrant une couche de cristal liquide 3. A titre d'exemple, le faisceau lumineux entre dans le dispositif par la face 20 de la lame 2 et ressort comme on le verra ci-après par les faces 21 et 22 des lames 1 et 2. Les indices de réfraction des lames 1 et 2, sont, par exemple de n = 1,65. Les indices de réfraction du cristal liquide sont, par exemple nₒ = 1,5 par l'indice ordinaire et nₑ = 1,65 pour l'indice extraordinaire. L'un des indices lu cristal liquide, l'indice extraordinaire par exemple, est sensiblement égal à celui de la lame 1.

Selon une technique connue, les faces des lames 1 et 2 sont recouvertes par une couche d'un matériau polyimide 4 et 5 (figure 2). Selon l'invention, la lame 1 après dépôt de la couche 4 est soumise à un traitement tel qu'un frottement dans une direction déterminée de telle façon que dans le séparateur, après assemblage, le cristal liquide 3 voit ses molécules, en contact avec la couche 4, s'orienter parallèlement au plan de la couche 4 et dans la direction déterminée précédente qui est la direction de frottement.

Selon une autre technique connue, la couche 5 a reçu un traitement par bain dans une solution de polysilane et étuvage. Les molécules en contact avec la couche 5 sont alors perpendiculaires au plan de la couche 5.

Entre les lames 1 et 2, les molécules de cristal liquide adoptent donc une disposition telle qu'en observant les différentes positions des molécules en déplaçant l'observation de la lame 2 vers la lame 1, on voit que les molécules sont tout d'abord perpendiculaires à la lame 2 et qu'elles ont des positions de plus en plus inclinées jusqu'à celles en contact avec la couche 4 qui sont parallèles au plan de la lame 1.

Le sens dans lequel se fait ce basculement peut être déterminé par un faible désalignement de surface comme cela est connu pour toutes les structures dites "Twisted Nematic". Ce désalignement ou "pretilt" peut être obtenu par le sens de frottement.

La figure 2 décrit un mode de fonctionnement du séparateur SP de l'invention, four faciliter cette description on suppose que la lame 1 au moins est épaisse et le faisceau F1 à traiter entre dans le dispositif par la tranche (face 20) de la lame 1. De plus, le cristal liquide est à fort écart d'indice entre indice ordinaire et indice extraordinaire. De plus, l'un des indices est sensiblement égal à celui de la lame 1.

Le faisceau incident F1 est dirigé sur l'interface face 1-cristal liquide 3, de telle façon que le plan d'incidence du faisceau F1 sur cet interface soit perpendiculaire à la direction d'orientation des molécules en contact avec la lame 1.

La polarisation P parallèle au plan d'incidence rencontre un dioptre dont l'indire du rayon émergent est l'indice ordinaire du cristal liquide ; pour des incidences supérieurs à Arcsinus (nₒ/n) (où n est l'indice du verre et nₒ l'indice du cristal liquide) il y a réflexion totale et conservation de la polarisation P.

La polarisation S perpendiculaire au plan d'incidence rencontre un dioptre dont l'indice du rayon émergent est l'indice extraordinaire du cristal liquide ; cet indice est très généralement supérieur à l'Indice ordinaire et nous nous intéresserons au cas où il est égal à l'indice du verre : nₑ = n. Cette polarisation rentre dans le cristal liquide sans subir de réflexion même partielle à l'interface.

La polarisation S se propage dans le cristal liquide suivant une incidence très oblique et subit une rotation du fait de la rotation du directeur du cristal liquide. En pratique, l'épaisseur de la cellule est de quelques microns et le pas de cette rotation est grand devant les longueurs d'ondes lumineuses ; la condition de Mauguin est satisfaite et la polarisation suit la rotation du directeur. La lumière émerge du cristal liquide suivant une polarisation P ; l'indice à l'interface est très voisin de ne et très peu de lumière est réfléchie. Par exemple, dans le cas où les indices sont 1.5/1.65 : l'indice minimum est de Aresin (1.5/1.65) = 65° ; à la sortie du cristal liquide l'angle d'incidence est augmenté de 2° environ, le directeur est vu sous un angle de 23° ; l'indice suit une loi de la forme nₑsin²(i)+nₒcos²(i) et vaut environ 1.62. Sous cette incidence la réflexion d'une onde polarisée P à l'interface d'indice 1.62/1.65 est de l'ordre de 0,1 %).

Comme on le voit sur la figure 2, la lumière du faisceau F1 polarisée S parallèlement à la direction des molécules en contact avec la lame 1 (donc perpendiculaire au plan d'incidence du faisceau F1) n'est pas déviée à l'interface de la lame 1 et du cristal liquide. Cette lumière voit ensuite, en traversant le cristal liquide, sa polarisation tourner et le faisceau sortant F3 se trouve polarisé parallèlement au plan parallèle au molécule en contact avec la lame 2, c'est-à-dire parallèlement à un plan perpendiculaire à la lame 2. Autrement dit, la direction de polarisation du faisceau F3 est parallèle au faisceau d'incidence.

La lumière du faisceau F1 polarisée P parallèlement au plan d'incidence est réfléchie sous la forme du faisceau F2 de même polarisation.

On notera que le chemin optique dans le cristal liquide Δ n.e doit être très grand par rapport à la demi longueur d'onde du faisceau ce qui est le cas d'un faisceau ayant un angle d'indice i élevé.

On va maintenant décrire un mode de réalisation d'un dispositif de visualisation selon l'invention.

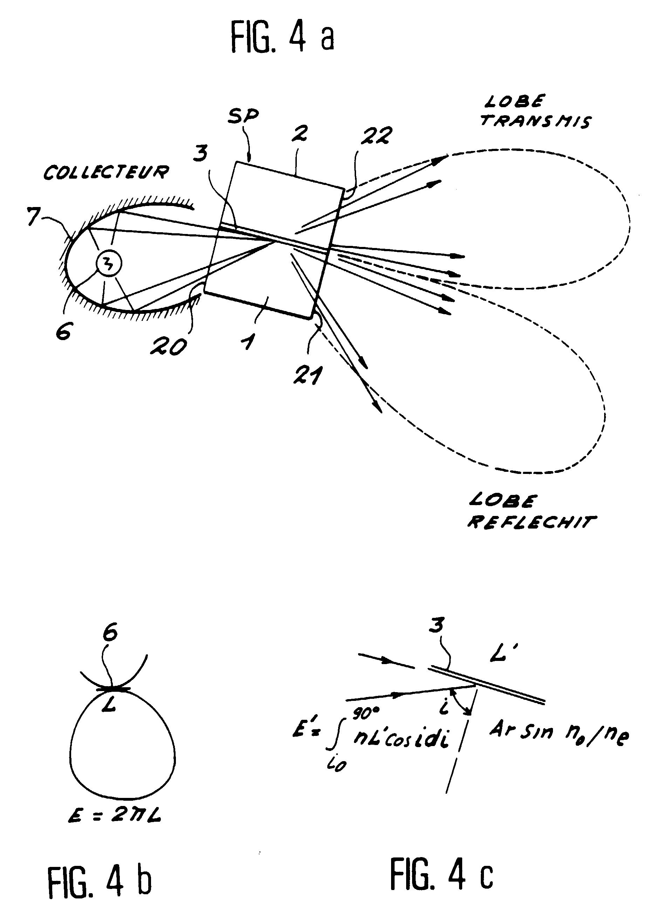

La figure 4a montre un exemple d'association d'une source 6, d'un collecteur elliptique 7 et du dispositif séparateur SP. Les tailles relatives de la source 6 et de la couche cristal liquide 3 sont données par leur étendue géométrique dans le plan d'incidence :
- pour la source : E = 2πL (voir figure 4b)
- pour la couche 3 : E'= ∫(nL'cos(i)di) de iₘᵢₙ à 90° (soit par exemple E' = 0,8 L' pour les indices 1.5/1.65) (voir figure 4c ).

En pratique, le dispositif a une acceptance en surface en fonction de l'ouverture différente de celle de la source et il est préférable de choisir une longueur de lame comprise entre 10 fois et 30 fois la taille de la source (20 fois par exemple) pour permettre de bien collecter tous les rayons qui en sont issus de la source.

Dans le plan perpendiculaire au plan d'incidence, l'ouverture n'est limitée que par l'angle sous lequel le rayon entrant dans le séparateur voit le directeur du cristal liquide. Cette limitation est faible et l'angle d'acceptance est proche de π dans l'air.

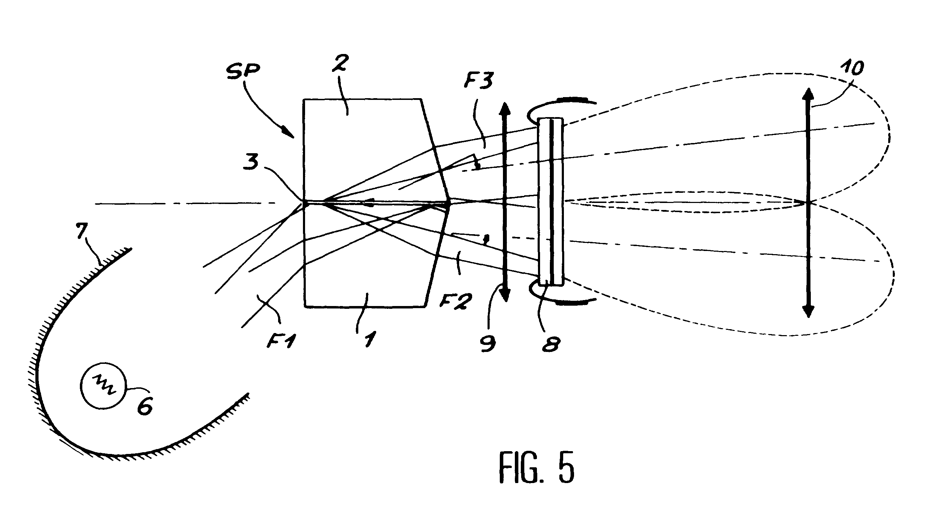

La figure 5 montre une réalisation pratique d'un projecteur appliquant le système de l'invention. On retrouve le séparateur SP, la source 6 et le réflecteur 7. Un écran modulateur de lumière 8 est éclairé par les faisceaux F2 et F3 issus du séparateur SP.

Ce modulateur peut être un écran électrooptique tel que par exemple un écran à cristal liquide.

La très efficace collection de la polarisation traversant le séparateur SP permet d'utiliser cette polarisation pour l'éclairage d'une moitié de l'image sans que des variations chromatiques entre les deux moitiés ne soient sensibles au spectateur. Toutefois, l'acceptance en surface du dispositif 8 étant nulle sur l'axe (i = 90°, cos(i) = 0), un prisme de sortie permet de faire converger les deux demi-faisceaux et d'éliminer toute raie sombre au centre de l'image. Sur la figure 4, les deux lames ont leur face de sortie taillée en "biseau" pour jouer le rôle de prisme ce qui permet de faire se chevaucher les deux lobes des deux faisceaux de sortie. Cependant, il est également possible de prévoir tout autre dispositif de déflexion de faisceau à la sortie du séparateur SP de façon à rapprocher les deux lobes d'éclairement de sortie de l'écran 8.

De plus, sur la figure 5, on a représenté, entre la source et le séparateur SP, une lentille de focalisation et à la sortie du système de projection, une optique de sortie (objectif).

Le système de la figure 4 a été décrit dans un mode de fonctionnement en projection. Cependant, sans sortir du cadre de l'invention, il pourrait être adapté pour fonctionner en visualisation directe.

Il est bien évident que la description qui précède n'a été faite qu'à titre d'exemple et que d'autres variantes peuvent être envisagées sans sortir du cadre de l'invention. Notamment les exemples numériques n'ont été fournis que pour illustrer la description.

## Revendications

1. Séparateur optique de polarisations (SP) comprenant un élément en cristal liquide nématique (3) enserré entre une première lame transparente (1) et une deuxième lame transparente (2), l'une des lames étant épaisse de manière qu'une tranche (20) de cette lame est destinée à opérer comme face d'incidence de la lumière, et les indices de réfraction ordinaire et extraordinaire du cristal liquide et l'indice de réfraction de ladite lame épaisse étant tels qu'un faisceau de lumière (F1) incident sur ladite tranche est séparé en deux faisceaux polarisés, un premier faisceau (F2) réfléchi par réflexion totale et un deuxième faisceau (F3) transmis par l'élément en cristal liquide, caractérisé en ce que une première face (4) d'une des lames en contact avec le cristal liquide est traitée de façon que les molécules du cristal liquide en contact avec cette face soient orientées parallèlement à cette face, et une deuxième face (5) de l'autre lame en contact avec le cristal liquide étant traitée de façon à ce que les molécules du cristal liquide soient orientées perpendiculairement à cette face de cette autre lame.

2. Séparateur de polarisations selon la revendication 1, caractérisé en ce que la lame épaisse est la lame comprenant ladite première face.

3. Séparateur de polarisations selon la revendication 1, caractérisé en ce que le cristal liquide (3) présente, pour une première polarisation (S) de la lumière du faisceau à traiter, un indice de réfraction sensiblement égal à l'indice de réfraction du matériau de la lame épaisse et pour la deuxième polarisation (P) de la lumière, un indice de réfraction différent de celui de la lame épaisse.

4. Système de visualisation appliquant le séparateur de polarisations (SP) selon l'une quelconque des revendications précédentes et comportant:
- une source lumineuse (6) fournissant un faisceau de lumière (F1) non polarisée ;
- ledit séparateur de polarisations (SP) recevant le faisceau de lumière (Fl) non polarisée et fournissant deux faisceaux (F2, F3) de lumière polarisée ayant le même êtat de polarisation ; et
- un modulateur de lumière (8) recevant les faisceaux de lumière polarisée (F2, F3) et modulant l'intensité de ces faisceaux.

5. Système de visualisation selon la revendication 4, caractérisé en ce que les faisceaux de lumière polarisée éclairent chacun sensiblement la moitié du modulateur de lumière (8).

6. Système de visualisation selon la revendication 4, caractérisé en ce que le modulateur de lumière est un modulateur électrooptique.

7. Système de visualisation selon la revendication 5, caractérisé en ce que le modulateur électrooptique est un écran à cristal liquide.

8. Système de visualisation selon la revendication 1, caractérisé en ce qu'il comporte entre le séparateur (SP) et le modulateur de lumière (8), des moyens de déflexion permettant de rapprocher les deux faisceaux (F2 et F3) issus du séparateur (SP).

9. Système de visualisation selon la revendication 8, caractérisé en ce que l'une au moins des faces de sortie (21,22) des lames (1, 2) du séparateur (SP) est en biseau de façon à tenir lieu de prisme de déflexion.

## Patentansprüche

1. Optischer Polarisationsteiler (SP), mit einem nematischen Flüssigkristall (3), der zwischen einem ersten lichtdurchlässigen Plättchen (1) und einem zweiten lichtdurchlässigen Plättchen (2) eingeklemmt ist, wobei eines der Plättchen dick ist, derart, daß eine Stirnfläche (20) dieses Plättchens dazu bestimmt ist, als Auftrefffläche für das Licht zu wirken, und wobei die Indizes der normalen Brechung und der anomalen Brechung des Flüssigkristalls und der Brechungsindex des dicken Plättchens derart sind, daß ein Lichtstrahlenbündel (F1), das auf die Stirnfläche auftrifft, in zwei polarisierte Strahlenbündel aufgeteilt wird, ein erstes Strahlenbündel (F2), das durch Totalreflexion reflektiert wird, und ein zweites Strahlenbündel (F3), das durch das Flüssigkristallelement durchgelassen wird, dadurch gekennzeichnet, daß eine erste Fläche (4) eines der Plättchen, das mit dem Flüssigkristall in Kontakt ist, in der Weise bearbeitet ist, daß die Moleküle des Flüssigkristalls, die mit dieser Fläche in Kontakt sind, parallel zu dieser Fläche orientiert sind, und eine zweite Fläche (5) eines anderen Plättchens, das mit dem Flüssigkristall in Kontakt ist, in der Weise bearbeitet ist, daß die Moleküle des Flüssigkristalls zu dieser Fläche dieses anderen Plättchens senkrecht orientiert sind.

2. Polarisationsteiler nach Anspruch 1, dadurch gekennzeichnet, daß das dicke Plättchen das die erste Fläche enthaltende Plättchen ist.

3. Polarisationsteiler nach Anspruch 1, dadurch gekennzeichnet, daß der Flüssigkristall (3) für eine erste Polarisation (S) des Lichts des zu bearbeitenden Strahlenbündels einen Brechungsindex aufweist, der im wesentlichen gleich dem Brechungsindex des Materials des dicken Plättchens ist, und für die zweite Polarisation (P) des Lichts einen Brechungsindex aufweist, der von demjenigen des dicken Plättchens verschieden ist.

4. Anzeigesystem, das den Polarisationsteiler (SP) nach irgendeinem der vorangehenden Ansprüche verwendet und enthält:
- eine Lichtquelle (6), die ein Strahlenbündel nicht polarisierten Lichts (F1) liefert;
- den Polarisationsteiler (SP), der das Strahlenbündel nicht polarisierten Lichts (F1) empfängt und zwei Strahlenbündel (F2, F3) polarisierten Lichts liefert, die denselben Polarisationszustand besitzen; und
- einen Lichtmodulator (8), der die Strahlenbündel polarisierten Lichts (F2, F3) empfängt und die Intensität dieser Strahlenbündel moduliert.

5. Anzeigesystem nach Anspruch 4, dadurch gekennzeichnet, daß die Strahlenbündel polarisierten Lichts jeweils im wesentlichen die Hälfte des Lichtmodulators (8) beleuchten.

6. Anzeigesystem nach Anspruch 4, dadurch gekennzeichnet, daß der Lichtmodulator ein elektrooptischer Modulator ist.

7. Anzeigesystem nach Anspruch 5, dadurch gekennzeichnet, daß der elektrooptische Modulator ein Flüssigkristallbildschirm ist.

8. Anzeigesystem nach Anspruch 1, dadurch gekennzeichnet, daß es zwischen dem Teiler (SP) und dem Lichtmodulator (8) Ablenkmittel enthält, die die Einstellung der zwei vom Teiler (SP) stammenden Strahlenbündel (F2 und F3) ermöglichen.

9. Anzeigesystem nach Anspruch 8, dadurch gekennzeichnet, daß wenigstens eine der Ausgangsflächen (21, 22) der Plättchen (1, 2) des Teilers (SP) facettiert ist, derart, daß sie die Prismenablenkung ersetzt.

## Claims

1. Optical polarizing beam splitter (SP) comprising an element made of nematic liquid crystal (3) gripped between a first transparent plate (1) and a second transparent plate (2), one of the plates being thick so that a portion (20) of this plate is intended to operate as a light-incident face, and the ordinary and extraordinary refractive indices of the liquid-crystal and the refractive index of the said thick plate being such that a beam of light (F1) incident on the said portion is separated into two polarized beams, a first beam (F2) reflected by total reflection and a second beam (F3) transmitted by the liquid-crystal element, characterized in that a first face (4) of one of the plates in contact with the liquid-crystal is treated in such a way that the liquid-crystal molecules in contact with this face are oriented so as to be parallel to this face, and a second face (5) of the other plate in contact with the liquid crystal being treated in such a way that the liquid-crystal molecules are oriented so as to be perpendicular to this face of this other plate.

2. Polarizing beam splitter according to Claim 1, characterized in that the thick plate is the plate comprising the said first face.

3. Polarizing beam splitter according to Claim 1, characterized in that the liquid crystal (3), for a first polarization (S) of the light of the beam to be treated, has a refractive index substantially equal to the refractive index of the material of the thick plate and, for the second polarization (P) of the light, a refractive index different from that of the thick plate.

4. Display system applying the polarizing beam splitter (SP) according to any one of the preceding claims and including:
- a light source (6) supplying an unpolarized light beam (F1);
- the said polarizing beam splitter (SP) receiving the unpolarized light beam (F1) and supplying two polarized-light beams (F2, F3) having the same polarization state; and
- a light modulator (8) receiving the polarized-light beams (F2, F3) and modulating the intensity of these beams.

5. Display system according to Claim 4, characterized in that the polarized-light beams each illuminate substantially half the light modulator (8).

6. Display system according to Claim 4, characterized in that the light modulator is an electrooptic modulator.

7. Display system according to Claim 5, characterized in that the electrooptic modulator is a liquid-crystal screen.

8. Display system according to Claim 1, characterized in that, between the splitter (SP) and the light modulator (8) it includes deflection means making it possible to bring together the two beams (F2 and F3) emanating from the splitter (SP).

9. Display system according to Claim 8, characterized in that at least one of the exit faces (21, 22) of the plates (1, 2) of the splitter (SP) is bevelled so as to take the place of a deflection prism.
